# EUROPÄISCHE PATENTSCHRIFT

(11) **EP 3 047 730 B1**
(45) Veröffentlichungstag und Bekanntmachung des Hinweises auf die Patenterteilung: **16.12.2020**
(21) Anmeldenummer: 16401004.3
(22) Anmeldetag: 18.01.2016
(51) Int. Cl.: A01M 7/00, G01F 23/36

(54) **LANDWIRTSCHAFTLICHE FELDSPRITZE MIT FÜLLSTANDSBESTIMMUNG**
AGRICULTURAL FIELD SPRAYER WITH DETERMINATION OF FILLING LEVEL
PULVERISATEUR AGRICOLE DOTE D'UN DISPOSITIF DE DETERMINATION DE NIVEAU DE REMPLISSAGE

(30) Priorität: 21.01.2015 DE 102015100813
(43) Veröffentlichungstag der Anmeldung: 27.07.2016
(73) Patentinhaber: Amazonen-Werke H. Dreyer GmbH & Co. KG, 49205 Hasbergen (DE)
(72) Erfinder: Rahe, Florian, 49504 Lotte (DE); Kühn, Christoph, 49080 Osnabrück (DE); Rüsse, Mario, 49080 Osnabrück (DE)

(56) Entgegenhaltungen:
- EP-A1- 0 623 280
- EP-A2- 2 789 232
- WO-A1-2006/032309
- DE-A1- 3 824 744

## Beschreibung

Die vorliegende Erfindung betrifft eine landwirtschaftliche Feldspritze gemäß Oberbegriff des Anspruchs 1.

Eine derartige Feldspritze ist beispielsweise aus der EP 2 789 232 A2 bekannt. Weiterhin ist eine Feldspritze aus der DE 102 43 024 A1 bekannt.

Dort ist im Flüssigkeitstank ein Schwimmerelement vorgesehen, welches mit einem elektronischen Drehwinkelgeber und einer elektronischen Anzeigevorrichtung verbunden ist, um den Füllstand einer Flüssigkeit im Flüssigkeitstank zu bestimmen und anzuzeigen.

Alternativ kann, wie in der WO2006/0323 vorgesehen, ein kapazitiver Füllstandssensor verwendet werden, um die Flüssigkeitsmenge im Flüssigkeitstank zu ermitteln.

Ein Nachteil dieser Füllstandsmessung ist jedoch, dass die Messungen aufgrund der Schwankungen im Flüssigkeitstank, welche beispielsweise durch die Bewegung der Feldspritze hervorgerufen werden, starken Variationen unterliegen. Außerdem führen statistische Schwankungen der Messungen über das Drehpotentiometer und den Schwimmer zu weiteren Ungenauigkeiten bei der Bestimmung des Füllstandes der Flüssigkeit im Flüssigkeitstank.

Es ist daher Aufgabe der vorliegenden Erfindung, eine landwirtschaftliche Feldspritze bereitzustellen, bei der der Füllstand einer Flüssigkeit im Flüssigkeitstank genauer erfasst werden kann.

Diese Aufgabe wird durch eine landwirtschaftliche Feldspritze gemäß Patentanspruch 1 gelöst.

Die Aufgabe wird erfindungsgemäß insbesondere dadurch gelöst, dass ein Messwert eines dem Flüssigkeitstank zugeordneten Füllstandssensors mit einem weiteren Messwert eines Durchflusssensors kombiniert wird, und basierend auf dieser Kombination der Füllstand der Flüssigkeit im Flüssigkeitstank bestimmt wird. Durch den Durchflusssensor kann beispielsweise die tatsächliche Ausbringmenge der Feldspritze bei der Bestimmung des Füllstandes berücksichtigt werden. Dadurch ist eine genauere Ermittlung des Füllstandes möglich. Wenn beispielsweise keine Flüssigkeit ausgebracht wird, kann der Füllstand als konstant ermittelt werden, obwohl der Füllstandssensor des Flüssigkeitstanks gegebenenfalls Schwankungen des Füllstands aufgrund einer Bewegung der Feldspritze nahelegt.

Bei der landwirtschaftlichen Feldspritze kann es sich insbesondere um eine Pflanzenschutzspritze handeln.

Der Flüssigkeitstank kann ein Brühetank für die Spritzbrühe sein. Es ist jedoch auch möglich, dass es sich bei dem Flüssigkeitstank um einen Klarwassertank handelt. Es ist auch denkbar, dass sowohl ein Klarwassertank als auch ein Brühetank vorhanden ist, und jedem der Tanks je ein Füllstandssensor zugeordnet ist. Die Auswerteeinrichtung kann dann zur jeweiligen Bestimmung des Füllstandes einer Flüssigkeit im jeweiligen Flüssigkeitstank Messwerte der jeweiligen Füllstandssensoren mit einem Messwert eines zugeordneten Durchflusssensors kombinieren, um den Füllstand einer Flüssigkeit im jeweiligen Flüssigkeitstank zu bestimmen.

Der dem Flüssigkeitstank zugeordnete Füllstandssensor kann insbesondere einen Schwimmer umfassen, der mit einem Drehpotentiometer verbunden ist. Über die Ausgangsspannung des Drehpotentiometers kann ein Messwert des Füllstandssensors ermittelt werden, der dem vom Füllstandssensor ermittelten Füllstand entspricht. Dieser Wert kann von der Auswerteeinrichtung als Messwert des Füllstandssensors verwendet werden. Alternativ oder zusätzlich kann die Auswerteeinrichtung auch direkt das Messsignal des Füllstandssensors, insbesondere des Drehpotentiometers, nutzen, um durch Kombination mit dem Messwert des Durchflusssensors oder dem Messsignal des Durchflusssensors den Füllstand der Flüssigkeit im Flüssigkeitstank zu bestimmen.

Die Auswerteeinrichtung kann insbesondere eine elektronische Steuer- und/oder Regeleinrichtung sein. Diese Steuer- und/oder Regeleinrichtung kann auch zur Steuerung oder Regelung der Ausbringung der Flüssigkeit aus dem Flüssigkeitstank mittels der landwirtschaftlichen Feldspritze genutzt werden. Die Auswerteeinrichtung kann insbesondere dem Bordcomputer der Feldspritze entsprechen, oder diesen umfassen.

Bei dem Durchflusssensor kann es sich um ein elektronisches oder elektromechanisches Element handeln, welches ein Messsignal proportional zur Flüssigkeitsmenge, die pro Zeiteinheit durch eine Flüssigkeitsleitung fließt, liefert. Bei dem Durchflussmesser kann es sich beispielsweise um einen Flügelradzähler handeln. Bei diesem Messverfahren wird mit Hilfe von in der Flüssigkeitsleitung angeordneten rotierenden mechanischen Elementen (Flügelräder) die Strömungsgeschwindigkeit ermittelt. Der Abgriff der Drehzahl erfolgt kontaktlos über magnetische Sensoren, dessen Impulse durch die Schaufeln über eine Elektronik ausgewertet werden. Die Drehzahl der Flügelräder ist proportional zum Durchfluss und Volumenstrom.

Bei dem Messwert des Durchflusssensors, der zur Bestimmung des Füllstandes durch die Auswerteinrichtung verwendet wird, kann es sich insbesondere um eine Flüssigkeitsmenge handeln, die in einer vorherbestimmten Zeitspanne durch die entsprechende Flüssigkeitsleitung geflossen ist. Beispielsweise kann der Messwert des Durchflusssensors der aufsummierten Ausbringmenge der Feldspritze seit der letzten Befüllung des Flüssigkeitstanks entsprechen.

Der Durchflusssensor kann insbesondere mit dem Flüssigkeitstank verbunden sein, insbesondere über eine Flüssigkeitsleitung. Der Durchflusssensor kann insbesondere derart ausgebildet sein, dass er eine Ermittlung der Ausbringmenge der landwirtschaftlichen Feldspritze ermöglicht.

Der durch die Auswerteeinrichtung bestimmte Füllstand kann über eine Anzeigevorrichtung der landwirtschaftlichen Feldspritze angezeigt werden. Bei der Anzeigevorrichtung kann es sich beispielsweise um die Anzeigevorrichtung des Bordcomputers handeln.

Die Auswerteeinrichtung kann insbesondere derart ausgebildet sein, dass sie die Messwerte der Sensoren über einen Algorithmus kombiniert. Der Algorithmus kann insbesondere einen Kalman-Filter umfassen. Dadurch ist eine besonders zuverlässige Bestimmung des Füllstandes möglich.

Für den Algorithmus können die Genauigkeit bzw. Exaktheit der jeweiligen Messwerte, also des Füllstandssensors und des Durchflusssensors, als Parameter angegeben werden. Diese Parameter bilden gewissermaßen Gewichtungsfaktoren, mit denen der Messwert des Füllstandssensors bzw. der Messwert des Durchflusssensors berücksichtigt wird. Durch Veränderung dieser Parameter oder Gewichtungsfaktoren kann somit beeinflusst werden, welchem der Messwerte ein höheres statistisches Gewicht gegeben wird. Die Sensorwerte werden jeweils hinsichtlich ihrer physikalischen Zusammenhänge, insbesondere dem Füllstand und/oder der Füllstandsänderung, durch den Algorithmus berücksichtigt.

Die Auswerteeinrichtung kann entsprechend derart ausgebildet sein, dass sie von dem Algorithmus verwendete Gewichtungsfaktoren oder Parameter abhängig vom Betrieb der landwirtschaftlichen Feldspritze anpasst oder verändert oder aktualisiert. Dadurch kann entsprechend des Betriebs der Feldspritze veränderten Genauigkeiten der Messwerte der einzelnen Sensoren Rechnung getragen werden.

"Abhängig vom Betrieb der Feldspritze" kann insbesondere abhängig von einem oder mehreren Betriebsparametern und/oder abhängig von einem Betriebsmodus der landwirtschaftlichen Feldspritze bedeuten. Betriebsparameter der Feldspritze können beispielsweise Geschwindigkeit, Neigung und/oder Position der Feldspritze sein. Bei den Betriebsmodi der Feldspritze kann man beispielsweise zwischen einem Ausbringmodus, bei dem Flüssigkeit aus dem Flüssigkeitstank auf einer landwirtschaftlichen Fläche ausgebracht wird, und einem Befüllmodus, bei dem der Flüssigkeitstank mit einer Flüssigkeit befüllt wird, unterscheiden.

Die Auswerteeinrichtung kann also derart ausgebildet sein, dass sie von dem Algorithmus verwendete Gewichtungsfaktoren oder Parameter abhängig von der Geschwindigkeit und/oder der Beschleunigung der Feldspritze und/oder der Neigung der Feldspritze und/oder Radius bei der Kurvenfahrt und/oder des Füllstands und/oder abhängig davon, ob die Feldspritze in einem Befüllmodus oder einem Ausbringmodus betrieben wird, anpasst.

Wird beispielsweise die Feldspritze insbesondere über einen Dom befüllt, wird keine Flüssigkeit ausgebracht. Die Feldspritze befindet sich also in einem Befüllmodus. Außerdem ist die Geschwindigkeit der Feldspritze gleich Null (0), wenn die Befüllung im Stand durchgeführt wird. Der Durchflusssensor misst entsprechend keinen Durchfluss. In diesem Fall muss dem Füllstandssensor das größere Gewicht gegeben werden, so dass die Füllstandszunahme korrekt wiedergegeben wird.

Zur Bestimmung der Betriebsparameter oder des Betriebsmodus kann die Feldspritze weitere Sensoren umfassen, beispielsweise einen Geschwindigkeitssensor und/oder einen Neigungssensor und/oder Beschleunigungssensor und/oder Lenkwinkelsensor.

Die Feldspritze kann außerdem ein Spritzdüsen umfassendes Verteilergestänge und eine den Flüssigkeitstank mit dem Verteilergestänge verbindende Flüssigkeitsleitung umfassen, wobei der Durchflusssensor in der Flüssigkeitsleitung angeordnet ist. Dadurch kann die Ausbringmenge der Feldspritze in vorteilhafter Weise über den Durchflusssensor bestimmt werden.

Die Feldspritze kann außerdem eine mit dem Flüssigkeitstank verbundene Pumpe umfassen, über die Flüssigkeit aus dem Tank in die Flüssigkeitsleitung förderbar ist.

Die Feldspritze, insbesondere das Verteilergestänge kann mehrere Teilbreiten umfassen, welche insbesondere separat ansteuerbar sind, zu denen also jeweils eine eigene Spritzleitung führt.

In diesem Fall kann sich die wenigstens eine Flüssigkeitsleitung in einem Bereich zwischen dem Flüssigkeitstank und dem Verteilergestänge in mehrere Spritzleitungen verzweigen, wobei den Spritzleitungen insbesondere Absperrventile zugeordnet sind. Der Durchflusssensor kann in diesem Fall zwischen der Pumpe und der Verzweigung der Flüssigkeitsleitung angeordnet sein.

In dem Bereich, in dem sich die Flüssigkeitsleitung in mehrere Spritzleitungen verzweigt, kann außerdem eine Verzweigung in eine zum Flüssigkeitstank zurückführende Zweigleitung vorgesehen sein, insbesondere wobei der Zweigleitung ebenfalls ein Absperrventil zugeordnet ist.

In diesem Fall kann in der Zweigleitung, insbesondere zwischen dem Absperrventil der Zweigleitung und dem Flüssigkeitstank, ein weiterer Durchflusssensor angeordnet sein, der mit der Auswerteeinrichtung verbunden ist. Über einen derartigen weiteren Durchflusssensor kann die tatsächliche Ausbringmenge der Feldspritze genauer bestimmt werden, insbesondere bei niedrigen Ausbringmengen.

Die Auswerteeinrichtung kann in diesem Fall derart ausgebildet sein, dass sie zur Bestimmung des Füllstandes einen Messwert des weiteren Durchflusssensors mit dem Messwert des Füllstandssensors und dem Messwert des Durchflusssensors kombiniert. Mit anderen Worten können Messwerte der beiden Durchflusssensoren und ein Messwert des Füllstandssensors zur Bestimmung des Füllstandes berücksichtigt werden. Dadurch ist es möglich, die Zuverlässigkeit der Füllstandsbestimmung weiter zu steigern.

Es ist auch möglich, dass noch weitere Durchflusssensoren vorgesehen sind, über welche Flüssigkeitsströmungen bestimmt werden können, welche den Füllstand der Flüssigkeit im Tank beeinflussen. Auch Messwerte dieser zusätzlichen Durchflusssensoren können zur Bestimmung des Füllstandes durch die Auswerteeinrichtung herangezogen oder berücksichtigt werden.

Die Auswerteeinrichtung kann derart ausgebildet sein, dass sie wenigstens zwei durch Kombination der Messwerte bestimmte Füllstände und/oder Durchflüsse verwendet, um eine automatische Kalibrierung des Durchflusssensors oder der Durchflusssensoren basierend auf einer Differenz der wenigstens zwei Füllstände und/oder Durchflüsse durchzuführen. Durch diese Maßnahme kann eine einfache Kalibrierung der Durchflusssensoren bereitgestellt werden, was die Genauigkeit der Messwerte der Durchflusssensoren erhöht.

Durchflusssensoren müssen üblicherweise regelmäßig kalibriert werden, beispielsweise jährlich, da aufgrund von Verschleiß und Ablagerungen die Messung im Verlauf der Zeit ungenauer wird.

Die automatische Kalibrierung kann insbesondere die Anpassung oder Korrektur eines Kalibrierwerts oder Kalibrierfaktors umfassen. Der Kalibrierwert kann insbesondere die Anzahl der Impulse des Durchflusssensors pro Liter angeben. Der Kalibrierwert kann über die Auswerteeinrichtung direkt berechnet werden. Alternativ kann die Auswerteeinrichtung einen Regler umfassen, mit dem der Kalibrierwert ermittelt wird. Der Regler kann beispielsweise ein PT₁ Glied umfassen.

Die automatische Kalibrierung kann im Betrieb der Feldspritze mit einer Tankfüllung des Flüssigkeitstanks mehrfach durchgeführt werden.

Die automatische Kalibrierung kann insbesondere durchgeführt werden, wenn die Differenz der wenigstens zwei Füllstände von der durch den Durchflusssensor in derselben Zeit ermittelten Durchflussmenge in vorherbestimmter Weise abweicht. Beispielsweise kann die Füllstandsänderung im Flüssigkeitstank kontinuierlich bestimmt werden und mit der aufsummierten Durchflussmenge des Durchflusssensors verglichen werden. Übersteigt die Differenz zwischen diesen Werten einen vorherbestimmten Schwellwert, kann die Kalibrierung durchgeführt werden.

Weiterhin ist es möglich, zwei Füllstandswerte in einen Durchfluss umzurechnen und diesen mit dem Messwert des Durchflusssensors zu vergleichen. Übersteigt die Differenz einen vorherbestimmten Schwellwert, kann die Kalibrierung durchgeführt werden.

Werden mehrere Durchflusssensoren eingesetzt, kann die Kalibrierung der einzelnen Durchflusssensoren in unterschiedlichen Betriebsmodi durchgeführt werden. Durch den entsprechend gewählten Betriebsmodus kann sichergestellt werden, dass ein Durchfluss durch den Durchflusssensor stattfindet, welcher kalibriert werden soll.

Wenn beispielsweise ein Durchflusssensor zwischen der Pumpe und der Verzweigung der Flüssigkeitsleitung in mehrere Spritzleitungen und in eine zum Flüssigkeitstank zurückführende Zweigleitung vorgesehen ist, kann die Kalibrierung dieses Durchflusssensors durchgeführt werden, wenn ein der Zweigleitung zugeordnetes Absperrventil verschlossen ist. Entsprechend kann ein in der Zweigleitung vorgesehener Durchflusssensor kalibriert werden, wenn alle Teilbreiten, also alle Spritzleitungen, welche zu den Teilbreiten des Spritzgestänges führen, geschlossen sind. In letzterem Fall sind die Durchflussmengen in der Zweigleitung und in der Flüssigkeitsleitung bis zur Verzweigung gleich.

Die Erfindung stellt außerdem ein Verfahren zum Bestimmen eines Füllstandes eines Flüssigkeitstanks einer landwirtschaftlichen Feldspritze gemäß Anspruch 9 bereit. Dieses Verfahren ermöglicht eine zuverlässige Bestimmung des Füllstandes einer Flüssigkeit in einem Flüssigkeitstank einer landwirtschaftlichen Feldspritze.

Die landwirtschaftliche Feldspritze und die entsprechenden Elemente der Feldspritze können eines oder mehrere der oben genannten Merkmale aufweisen. Gemäß dem Verfahren kann die Auswerteeinrichtung einen oder mehrere der Schritte durchführen, für deren Durchführung sie zuvor als ausgebildet beschrieben wurde.

Insbesondere kann die Auswerteeinrichtung die Messwerte über einen Algorithmus kombinieren, wobei der Algorithmus insbesondere einen Kalman-Filter umfassen kann. Die von dem Kalman-Filter verwendeten Gewichtungsfaktoren oder Parameter können wie oben beschrieben in Abhängigkeit von dem Betrieb der landwirtschaftlichen Feldspritze angepasst werden.

Das Verfahren kann außerdem ein automatisches Kalibrieren des Durchflusssensors basierend auf einer Differenz von wenigstens zwei bestimmten Füllständen umfassen. Die automatische Kalibrierung kann dabei wie oben beschrieben durchgeführt werden.

Mit anderen Worten kann das Verfahren ein Verfahren zum Bestimmen eines Füllstandes eines Flüssigkeitstanks mittels einer zuvor beschriebenen landwirtschaftlichen Feldspritze sein.

Weitere Merkmale und Vorteile der Erfindung werden nachfolgend anhand der beispielhaften Figuren erläutert. Dabei zeigt
- Fig. 1: eine schematische Darstellung einer beispielhaften landwirtschaftlichen Feldspritze;
- Fig. 2: eine schematische Darstellung einer weiteren beispielhaften Feldspritze; und
- Fig. 3: ein zeitliches Diagramm des Füllstandes der Flüssigkeit im Flüssigkeitstank sowie der aufsummierten Ausbringmenge der Feldspritze.

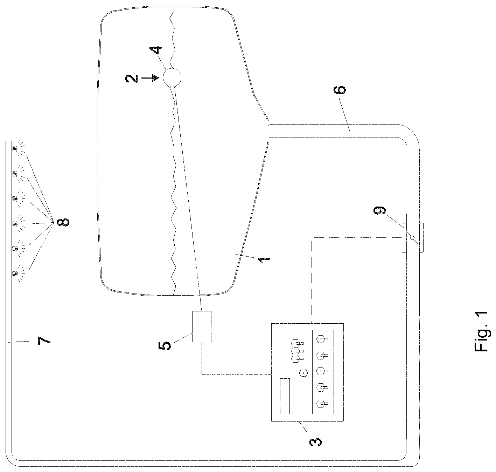

Fig. 1 zeigt schematisch ein Beispiel einer landwirtschaftlichen Feldspritze, insbesondere einer Pflanzenschutzspritze. Die Feldspritze umfasst einen Flüssigkeitstank 1, der insbesondere ein Brühetank der Spritzbrühe ist.

Diesem Flüssigkeitstank 1 ist ein Füllstandssensor 2 zugeordnet, der in diesem Beispiel ein Schwimmerelement 4 und ein Drehpotentiometer 5 umfasst. Das Drehpotentiometer 5 ist mit einer Auswerteeinrichtung 3 verbunden. Dadurch ist es möglich, ein Messsignal des Drehpotentiometers an die Auswerteeinrichtung zu liefern.

Über eine Flüssigkeitsleitung 6 ist der Flüssigkeitstank 1 mit einem Verteilergestänge 7 verbunden, welches mehrere Spritzdüsen 8 umfasst. In der Flüssigkeitsleitung 6 ist ein Durchflusssensor 9 vorgesehen, der ebenfalls mit der Auswerteeinrichtung 3 verbunden ist, sodass ein Messsignal des Durchflusssensors 9 an die Auswerteeinrichtung 3 übermittelt werden kann.

Die Auswerteeinrichtung 3 kann beispielsweise der Bordcomputer der Feldspritze sein. Die Auswerteeinrichtung 3 empfängt Messsignale des Füllstandssensors 2 sowie des Durchflusssensors 9. Die Auswerteeinrichtung 3 bestimmt dann basierend auf einem Messwert des Füllstandssensors 2 und einem Messwert des Durchflusssensors 9 den Füllstand einer Flüssigkeit im Flüssigkeitstank 1.

Die genannten Messwerte können entweder den Messsignalen der Sensoren direkt entsprechen oder auf diesen Messsignalen beruhen. Beispielsweise kann die Auswerteinrichtung die Messsignale zunächst in geeignete Messwerte umrechnen oder umwandeln und basierend auf den so bestimmten Messwerten die Bestimmung des Füllstandes durchführen. Beispielsweise kann das Signal des Drehpotentiometers 5 zunächst in einen vorläufigen Füllstand umgerechnet werden. Das Messsignal des Durchflusssensors 9 kann über einen Kalibrierwert in eine Durchflussmenge umgerechnet werden, die seit der letzten Befüllung des Flüssigkeitstanks 1 oder während einer vorherbestimmten Zeitspanne durch die Flüssigkeitsleitung 6 gefördert wurde.

Basierend auf diesen Werten kann die Bestimmung des Füllstandes durchgeführt werden.

Insbesondere kombiniert die Auswerteeinrichtung 3 die Messwerte der Sensoren 2, 9 über eigenen Algorithmus, der beispielsweise in einem nicht dargestellten Speicherelement hinterlegt ist.

Durch eine solche Kombination können Schwankungen und Messungenauigkeiten der Füllstandsbestimmung über den Füllstandssensor 2 alleine ausgeglichen oder korrigiert werden. Wenn beispielsweise keine Spritzbrühe ausgebracht wird, bleibt der ermittelte Füllstand konstant und schwankt nicht, obwohl die Füllstandsmessung über den Füllstandssensor 2 Schwankungen unterliegt, beispielsweise aufgrund von Bewegungen der Feldspritze.

Der Algorithmus kann insbesondere einen Kalman-Filter umfassen oder ein Kalman-Filter sein. Ein Kalman-Filter ist ein Filter oder Algorithmus zur Zustandsschätzung linearer und nichtlinearer Systeme. Die Basis dieses Filters kann ein physikalisches Modell des Flüssigkeitstanks bilden, wobei der Füllstand sowie die Änderung des Füllstands (der Durchfluss) in dem Modell berücksichtigt werden. Die Änderung des Füllstands entspricht der Ableitung des Füllstands nach der Zeit. Die Änderung des Füllstands kann über den Durchflusssensor 9 bestimmt werden, der mit dem Flüssigkeitstank 1 und dem Spritzgestänge 7 verbunden ist.

In dem Algorithmus können die Genauigkeiten der jeweiligen Messungen mit den jeweiligen Sensoren, also Durchflusssensor 9 und Füllstandssensor 2 als Parameter angegeben werden. Werden diese Parameter verändert, wird auch die Gewichtung der Messungen entsprechend verändert. Dies hat zur Folge, dass je nach Gewichtung der bestimmte oder berechnete Füllstand mehr durch die Messung des Füllstandssensors oder mehr durch die Messung des Durchflusssensors bestimmt wird.

Diese Gewichtung kann abhängig vom Betrieb der Feldspritze angepasst oder modifiziert werden. Dafür können ein oder mehrere Betriebsparameter und/oder ein Betriebsmodus der Feldspritze berücksichtigt werden. Die Betriebsparameter umfassen beispielsweise Neigung oder Geschwindigkeit der Feldspritze. Je nach Neigung können unterschiedliche Gewichtungen sinnvoll sein. Bei einer starken Neigung der Feldspritze kann beispielsweise der Füllstand, der über den Füllstandssensor 2 bestimmt wird, stark schwanken und unzuverlässig sein. In diesem Fall kann ein höheres Gewicht auf die Durchflussmessung über den Durchflusssensor 9 gelegt werden. Auch bei höherer Geschwindigkeit kann mit größeren Schwankungen der Werte des Füllstandssensors 2 gerechnet werden, so dass eine Anpassung der Gewichtungsfaktoren angezeigt sein kann.

Alternativ kann bei einer Befüllung der Feldspritze, beispielsweise über einen Dom, der Gewichtungsfaktor für den Messwert des Durchflusssensors reduziert werden. Bei der Befüllung tritt nämlich eine Füllstandsänderung (Füllstandszunahme) auf, ohne dass der Durchflusssensor 9 einen Durchfluss messen würde. Gegebenenfalls kann der Gewichtungsfaktor des Durchflusssensors 9 in diesem Fall auch auf 0 gesetzt werden. Die Kombination der Messwerte durch die Auswerteeinrichtung gibt in diesem Fall im Wesentlichen den Füllstand wieder, der durch den Füllstandssensor 2 geliefert wird.

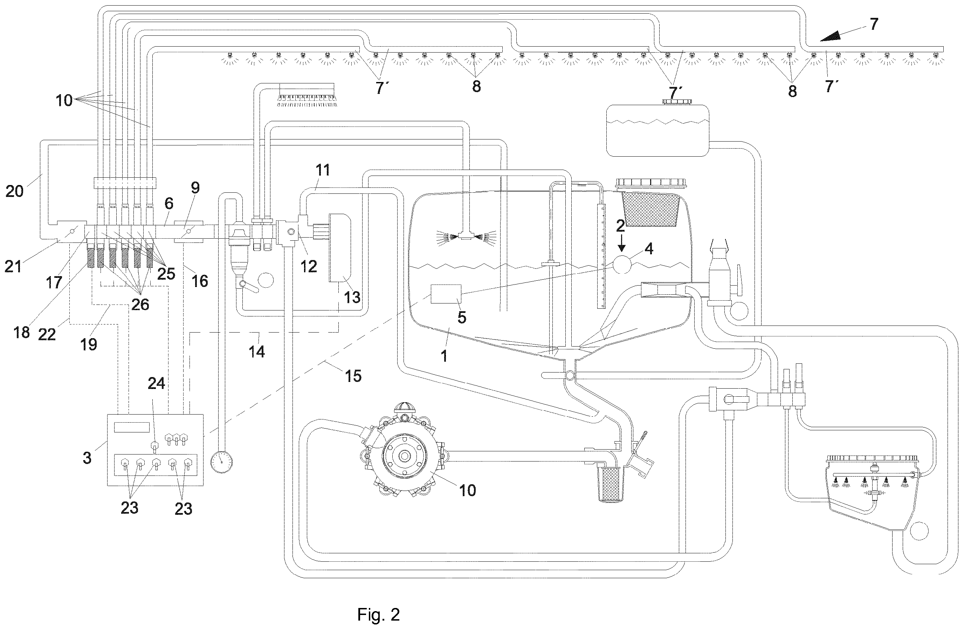

Fig. 2 zeigt ein weiteres Beispiel einer landwirtschaftlichen Feldspritze in einer etwas detaillierteren Darstellung. Ein wichtiger Unterschied zum Beispiel der Fig. 1 liegt darin, dass in dieser Ausführungsform zwei Durchflusssensoren vorgesehen sind.

Die beispielhafte Feldspritze der Fig. 2 umfasst ebenfalls einen Flüssigkeitstank 1, einen dem Flüssigkeitstank 1 zugeordneten Füllstandssensor 2 umfassend einen Schwimmer 4 und ein Drehpotentiometer 5, das mit einer Auswerteeinrichtung 3 verbunden ist. Die Verbindung zwischen Drehpotentiometer 5 und Auswerteeinrichtung 3 erfolgt über eine entsprechende Leitung 15.

Die Feldspritze umfasst auch ein Verteilergestänge 7, das sich in diesem Beispiel jedoch in mehrere Teilbreiten 7' unterteilt. Jede dieser Teilbreiten 7' umfasst entsprechende Spritzdüsen 8.

Das Spritzgestänge 7 ist mit dem Flüssigkeitstank 1 über eine Flüssigkeitsleitung 6 verbunden, in die Flüssigkeit über eine Pumpe 10 gefördert werden kann. Der Leitungsabschnitt der Flüssigkeitsleitung 6 stromabwärts der Pumpe 10 kann auch als Druckleitung bezeichnet werden, da die Pumpe die Flüssigkeit mit einem Überdruck bereitstellen kann.

In der Fig. 2 ist auch eine Dosierarmatur 12 dargestellt, die mit der Pumpe 10 verbunden ist. Die Dosierarmatur 12 ist über einen Stellmotor 13 einstellbar. Bei der Dosierarmatur 12 zweigt eine Rücklaufleitung 11 von der Flüssigkeitsleitung 6 ab.

Zwischen der Dosierarmatur 12 und dem Spritzgestänge 7 verzweigt sich die Flüssigkeitsleitung 6 in mehrere Spritzleitungen 10 sowie in eine Zweigleitung 20, die in den Flüssigkeitstank 1 zurückführt.

Den Spritzleitungen 10 sind Absperrventile 25 zugeordnet, welche durch motorische Einstellglieder 26 betätigt werden können. Die Einstellglieder 26 sind ebenfalls mit der Auswerteeinrichtung 3 verbunden, die in diesem Beispiel auch die Steuer- und/oder Regelungseinrichtung für den Spritzbetrieb bildet.

In der Flüssigkeitsleitung 6 ist vor der Verzweigung in die einzelnen Spritzleitungen 10 der erste Durchflussmesser 9 vorgesehen, welcher über die Leitung 16 Messsignale an die Auswerteeinrichtung 3 liefert. Ebenso ist in der Zweigleitung 20 nach einem zugehörigen Absperrventil 17 ein zweiter Durchflusssensor 21 angeordnet, der über die Leitung 22 mit der Auswerteeinrichtung 3 verbunden ist. Das Absperrventil 17 weist das motorische Einstellelement 18 auf, welches über die Leitung 19 mit der Auswerteeinrichtung 3 verbunden ist.

Die Auswerteeinrichtung 3 weist in diesem Beispiel einzelne Schalter 23 zum Betätigen der den Absperrventilen 25 zugeordneten Betätigungselemente 26 auf, mittels welcher die jeweilige Teilbreite 7' freigegeben oder abgesperrt werden kann. Des Weiteren ist ein Zentralschalter 24 vorgesehen, mittels welchem sämtliche Absperrventile 25 über die Betätigungselemente 26 gleichzeitig betätigt werden können.

Zur Bestimmung des Füllstandes einer Flüssigkeit im Flüssigkeitstank 1 ist die Auswerteeinrichtung 3 derart ausgebildet, dass sie einen Messwert des Füllstandssensors 2 mit einem Messwert des ersten Durchflusssensors 9 und einem Messwert des zweiten Durchflusssensors 21 über einen Algorithmus kombiniert. Der Algorithmus kann wie oben ausgeführt einen Kalman-Filter umfassen oder einem solchen entsprechen. Weitere Merkmale können entsprechend dem Ausführungsbeispiel der Fig. 1 ausgebildet sein.

Da durch die beiden Durchflusssensoren 9, 21 die tatsächliche Ausbringmenge der Feldspritze genauer bestimmt werden kann, kann durch eine Kombination der beiden Durchflusssensoren auch die Füllstandsbestimmung weiter verbessert werden.

Der ermittelte Füllstand kann dann auf einer nicht dargestellten Anzeigevorrichtung der Feldspritze angezeigt werden, und/oder die Grundlage für weitere Berechnungen bilden.

Die so ermittelten Füllstände können gemäß einem weiteren Ausführungsbeispiel verwendet werden, um den oder die Durchflusssensoren automatisch zu kalibrieren.

Durchflusssensoren von Feldspritzen müssen regelmäßig kalibriert werden, da aufgrund von Verschleiß und Ablagerungen die Messung im Laufe der Zeit ungenauer wird. Im Stand der Technik wurde eine entsprechende Kalibration in bestimmten zeitlichen Abständen, beispielsweise jährlich, durchgeführt. Eine Kalibrierung war für die Bedienperson der Feldspritze selbst im Regelfall jedoch nicht möglich.

Die vorliegende Ausführungsform der Erfindung sieht vor, dass eine Differenz von wenigstens zwei Füllständen bestimmt und als definierte Flüssigkeitsmenge verwendet wird, um eine automatische Kalibrierung der Durchflusssensoren durchzuführen.

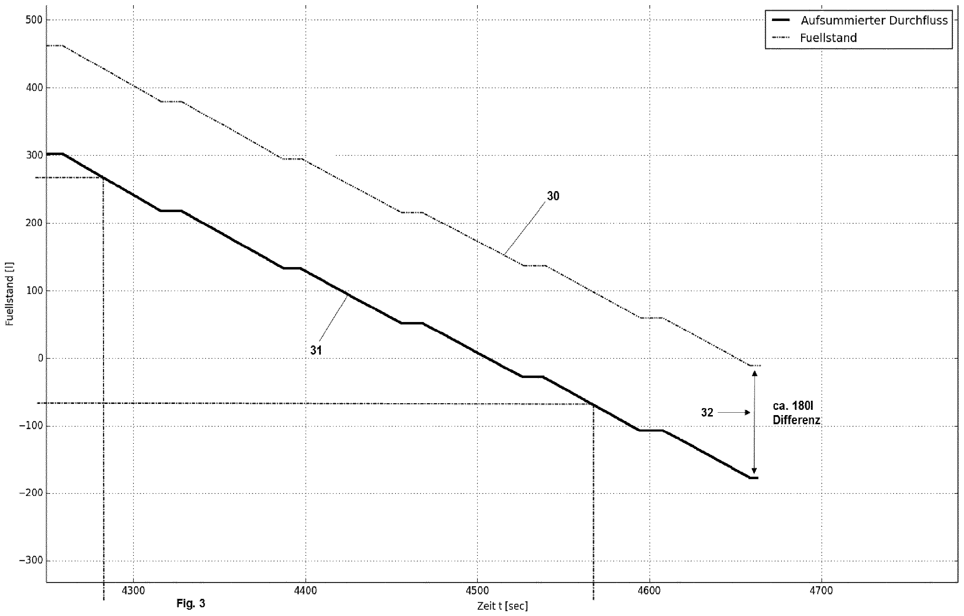

Beispielsweise können dauerhaft oder kontinuierlich die Differenzen von Füllständen eines Arbeitsgangs mit der aufsummierten Durchflussmenge des Durchflusssensors verglichen werden. Ein beispielhafter zeitlicher Verlauf dieser Größen ist in Fig. 3 dargestellt. Die Linie 30 gibt die zeitliche Veränderung des Füllstandes des Flüssigkeitstanks wieder, der wie oben dargestellt basierend auf einer Kombination der Messwerte bestimmt wurde. Die Linie 31 gibt dagegen den aufsummierten Durchfluss durch einen Durchflusssensor, beispielsweise den Durchflusssensor 9 der obigen Ausführungsbeispiele, wieder. Bei einer Abweichung der beiden Größen um mehr als einen vorherbestimmten Schwellwert, beispielsweise 100 Liter (I), wird eine Kalibrierung durchgeführt. Im Beispiel der Fig. 3 entspricht die Differenz 32 zwischen den Größen etwa 180 I. Entsprechend wird in diesem Beispiel eine automatische Kalibrierung wie folgt durchgeführt.

Zunächst wird die Ausbringmenge während des Arbeitsgangs aus der Füllstandsdifferenz bestimmt. Beispielsweise kann sich hier eine Ausbringmenge von 5400 I ergeben. Es wird angenommen, dass diese Differenz der Füllstände der tatsächlichen Ausbringmenge entspricht, da die Füllstände mit dem oben beschriebenen Verfahren zuverlässig bestimmt wurden.

Die durch den Durchflusssensor gemessene Durchflussmenge wird daraufhin bestimmt und durch Multiplikation mit dem aktuellen Kalibrierwert in Impulse des Arbeitsgangs umgerechnet. Beispielsweise kann die aufsummierte Durchflussmenge des Durchflusssensors 5580 I entsprechen. Multipliziert mit einem beispielhaften aktuellen Kalibrierwert von 700 Impulsen pro Liter ergibt sich daraus eine Zahl von 3.906.000 Impulsen. Der neue oder aktualisierte Kalibrierwert kann dann durch Division dieser Impulse durch die tatsächliche Ausbringmenge bestimmt werden. In diesem Fall wird also die Anzahl der Impulse 3.906.000 Impulse durch 5400 I dividiert. Dies ergibt in diesem konkreten Beispiel einen neuen Kalibrierwert von 723 Impulsen pro Liter.

Dieser neue Kalibrierwert kann wie in dieser Beispielrechnung direkt über die Auswerteeinrichtung 3 berechnet werden oder mit Hilfe eines Reglers ermittelt werden, der beispielsweise ein PT₁ Glied umfasst oder ein solches ist.

Eine entsprechende automatische Kalibrierung kann mehrmals während eines Arbeitsgangs durchgeführt werden. Die Kalibrierung kann auch mehrmals über mehrere Arbeitsgänge durchgeführt werden, insbesondere sofern zwischenzeitlich keine weitere Befüllung des Flüssigkeitstanks durchgeführt wird.

Werden zwei Durchflusssensoren eingesetzt, wie im Beispiel der Fig. 2 gezeigt, kann die Kalibrierung in unterschiedlichen Situationen oder Betriebsmodi durchgeführt werden. Zur Kalibrierung des ersten Durchlaufsensors 9 der Fig. 2 kann beispielsweise die Zweigleitung 20 über das Absperrventil 17 verschlossen werden. Zur Kalibrierung des zweiten Durchflusssensors 21 können dagegen alle Teilbreiten 7' geschlossen werden, beispielsweise indem über den Zentralschalter 24 sämtliche Absperrventile 25 durch die entsprechenden Betätigungselemente 26 abgesperrt werden. Wenn alle Teilbreiten geschlossen sind, sind die Durchflussmengen in der Flüssigkeitsleitung 6 und der Zweigleitung 20 identisch.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Außerdem ist beispielsweise der Füllstandssensor nicht auf eine Kombination aus Schwimmer und Drehpotentiometer beschränkt. Es sind auch andere Sensoren vorstellbar, beispielsweise optische. Auch die Durchflusssensoren sind nicht auf eine bestimmte Ausführungsform beschränkt.

## Patentansprüche

1. Landwirtschaftliche Feldspritze umfassend:
einen Flüssigkeitstank (1);
einen dem Flüssigkeitstank (1) zugeordneten Füllstandssensor (2); und
eine mit dem Füllstandssensor (2) verbundene Auswerteeinrichtung (3); wobei die Auswerteeinrichtung (3) außerdem mit einem Durchflusssensor (9; 21) verbunden ist;
**dadurch gekennzeichnet, dass**
die Auswerteeinrichtung (3) derart ausgebildet ist, dass sie einen Messwert des Füllstandssensors (2) mit einem Messwert des Durchflusssensors (9; 21) zur Bestimmung des Füllstandes einer Flüssigkeit im Flüssigkeitstank (1) kombiniert.

2. Landwirtschaftliche Feldspritze nach Anspruch 1, wobei die Auswerteeinrichtung (3) derart ausgebildet ist, dass sie die Messwerte über einen Algorithmus kombiniert, wobei der Algorithmus die physikalischen Zusammenhänge der Sensorwerte, insbesondere zwischen Füllstandshöhe und Füllstandsänderung, berücksichtigt und Gewichtungsfaktoren bzgl. der Exaktheit der Sensorwerte berücksichtigt.

3. Landwirtschaftliche Feldspritze nach Anspruch 2, wobei die Auswerteeinrichtung (3) derart ausgebildet ist, dass sie die von dem Algorithmus verwendeten Gewichtungsfaktoren abhängig vom Betrieb der landwirtschaftlichen Feldspritze anpasst.

4. Landwirtschaftliche Feldspritze nach Anspruch 3, wobei die Auswerteeinrichtung (3) derart ausgebildet ist, dass sie von dem Algorithmus verwendete Gewichtungsfaktoren abhängig von der Geschwindigkeit der Feldspritze und/oder der Neigung der Feldspritze und/oder Füllstand der Feldspritze und/oder abhängig davon, ob die Feldspritze in einem Befüllmodus oder einem Ausbringmodus betrieben wird, anpasst.

5. Landwirtschaftliche Feldspritze nach einem der vorangegangenen Ansprüche, außerdem umfassend:
ein Spritzdüsen (8) umfassendes Verteilergestänge (7); und
eine den Flüssigkeitstank (1) mit dem Verteilergestänge (7) verbindende Flüssigkeitsleitung (6);
wobei der Durchflusssensor (9) in der Flüssigkeitsleitung (6) angeordnet ist.

6. Landwirtschaftliche Feldspritze nach einem der vorangegangenen Ansprüche, wobei die Auswerteeinrichtung (3) derart ausgebildet ist, dass sie wenigstens zwei durch Kombination der Messwerte bestimmte Füllstände und/oder Durchflüsse verwendet, um eine automatische Kalibrierung des Durchflusssensors (9; 21) basierend auf einer Differenz der wenigstens zwei Füllstände und/oder Durchflüsse durchzuführen.

7. Landwirtschaftliche Feldspritze nach Anspruch 6, wobei die automatische Kalibrierung im Betrieb der Feldspritze mit einer Tankfüllung des Flüssigkeitstanks (1) mehrfach durchgeführt wird.

8. Landwirtschaftliche Feldspritze nach Anspruch 6 oder 7, wobei die automatische Kalibrierung durchgeführt wird, wenn die Differenz der wenigstens zwei Füllstände und/oder Durchflüsse von der durch den Durchflusssensor in derselben Zeit ermittelten Durchflussmenge in vorherbestimmter Weise abweicht.

9. Landwirtschaftliche Feldspritze nach einem der vorangegangenen Ansprüche, **dadurch gekennzeichnet, dass** der Algorithmus zur Kombination der Messwerte einen Kalman-Filter umfasst.

10. Verfahren zum Bestimmen eines Füllstandes eines Flüssigkeitstanks (1) einer landwirtschaftliche Feldspritze, die einen Flüssigkeitstank (1), einen dem Flüssigkeitstank (1) zugeordneten Füllstandssensor (2), einen Durchflusssensor (9; 21) und eine mit dem Füllstandssensor (2) und dem Durchflusssensor (9; 21) verbundene Auswerteeinrichtung (3) umfasst; das Verfahren umfassend die Schritte:
Bestimmen eines Messwerts des Füllstandssensors (2);
Bestimmen eines Messwerts des Durchflusssensors (9; 21); und
Bestimmen des Füllstandes des Flüssigkeitstanks (1) durch die Auswerteeinrichtung (3), basierend auf einer Kombination des Messwerts des Füllstandssensors (2) mit dem Messwert des Durchflusssensors (9; 21).

11. Verfahren nach Anspruch 9, wobei die Auswerteeinrichtung (3) die Messwerte über einen Algorithmus kombiniert und die vom Algorithmus verwendeten Gewichtungsfaktoren in Abhängigkeit von dem Betrieb der landwirtschaftlichen Feldspritze anpasst werden.

12. Verfahren nach Anspruch 9 oder 10, außerdem umfassend ein automatisches Kalibrieren des Durchflusssensors basierend auf einer Differenz von wenigstens zwei bestimmten Füllständen.

13. Verfahren nach einem der Ansprüche 10- 13, **dadurch gekennzeichnet, dass** der Algorithmus zur Kombination der Messwerte einen Kalman-Filter umfasst.

## Claims

1. Agricultural field sprayer comprising:
a liquid tank (1);
a filling level sensor (2) assigned to the liquid tank (1); and
an evaluation device (3) connected to the filling level sensor (2);
wherein the evaluation device (3) is furthermore connected to a flow rate sensor (9; 21);
**characterized in that**
the evaluation device (3) is configured such that it combines a measurement of the filling level sensor (2) with a measurement of the flow rate sensor (9; 21) in order to determine the filling level of a liquid in the liquid tank (1).

2. Agricultural field sprayer according to Claim 1, wherein the evaluation device (3) is configured such that it combines the measurements via an algorithm, wherein the algorithm takes into account the physical relationships of the sensor values, in particular between filling level height and change in filling level, and takes into account weighting factors regarding the accuracy of the sensor values.

3. Agricultural field sprayer according to Claim 2, wherein the evaluation device (3) is configured such that it adapts the weighting factors used by the algorithm depending on the operation of the agricultural field sprayer.

4. Agricultural field sprayer according to Claim 3, wherein the evaluation device (3) is configured such that it adapts the weighting factors used by the algorithm depending on the speed of the field sprayer and/or on the inclination of the field sprayer and/or filling level of the field sprayer and/or depending on whether the field sprayer is being operated in a filling mode or in a dispensing mode.

5. Agricultural field sprayer according to one of the preceding claims, also comprising:
a distributor boom (7) comprising spray nozzles (8); and
a liquid line (6) connecting the liquid tank (1) to the distributor boom (7);
wherein the flow rate sensor (9) is arranged in the liquid line (6).

6. Agricultural field sprayer according to one of the preceding claims, wherein the evaluation device (3) is configured such that it uses at least two filling levels and/or flow rates determined by combination of the measurements, in order to carry out automatic calibration of the flow rate sensor (9; 21) on the basis of a difference between the at least two filling levels and/or flow rates.

7. Agricultural field sprayer according to Claim 6, wherein the automatic calibration is carried out multiple times during operation of the field sprayer with tank filling of the liquid tank (1).

8. Agricultural field sprayer according to Claim 6 or 7, wherein the automatic calibration is carried out when the difference between the at least two filling levels and/or flow rates deviates in a predetermined way from the flow rate determined at the same time by the flow rate sensor.

9. Agricultural field sprayer according to one of the preceding claims, **characterized in that** the algorithm for combining the measurements comprises a Kalman filter.

10. Method for determining a filling level of a liquid tank (1) of an agricultural field sprayer that comprises a liquid tank (1), a filling level sensor (2) assigned to the liquid tank (1), a flow rate sensor (9; 21) and an evaluation device (3) connected to the filling level sensor (2) and the flow rate sensor (9; 21); the method comprising the steps of:
determining a measurement of the filling level sensor (2) ;
determining a measurement of the flow rate sensor (9; 21); and
determining the filling level of the liquid tank (1) by the evaluation device (3), on the basis of a combination of the measurement of the filling level sensor (2) with the measurement of the flow rate sensor (9; 21).

11. Method according to Claim 9, wherein the evaluation device (3) combines the measurements via an algorithm and the weighting factors used by the algorithm are adapted depending on the operation of the agricultural field sprayer.

12. Method according to Claim 9 or 10, also comprising automatic calibration of the flow rate sensor on the basis of a difference between at least two determined filling levels.

13. Method according to one of Claims 10-13, **characterized in that** the algorithm for combining the measurements comprises a Kalman filter.

## Revendications

1. Pulvérisateur à cultures agricole, comprenant :
un réservoir à liquide (1) ;
un détecteur de niveau (2) associé au réservoir à liquide (1) ; et
un dispositif d'interprétation (3) relié au détecteur de niveau (2) ;
le dispositif d'interprétation (3) étant en outre relié à un détecteur de débit (9 ; 21) ;
**caractérisé en ce que**
le dispositif d'interprétation (3) est configuré de telle sorte qu'il combine une valeur mesurée du détecteur de niveau (2) avec une valeur mesurée du détecteur de débit (9 ; 21) en vue de déterminer le niveau d'un liquide dans le réservoir à liquide (1).

2. Pulvérisateur à cultures agricole selon la revendication 1, le dispositif d'interprétation (3) étant configuré de telle sorte qu'il combine les valeurs mesurées par le biais d'un algorithme, l'algorithme tenant compte des corrélations physiques des valeurs de détecteur, notamment entre la hauteur du niveau et la variation du niveau, et tenant compte de facteurs de pondération concernant l'exactitude des valeurs de détecteur.

3. Pulvérisateur à cultures agricole selon la revendication 2, le dispositif d'interprétation (3) étant configuré de telle sorte qu'il adapte les facteurs de pondération utilisés par l'algorithme en fonction du fonctionnement du pulvérisateur à cultures agricole.

4. Pulvérisateur à cultures agricole selon la revendication 3, le dispositif d'interprétation (3) étant configuré de telle sorte qu'il adapte les facteurs de pondération utilisés par l'algorithme en fonction de la vitesse du pulvérisateur à cultures et/ou de l'inclinaison du pulvérisateur à cultures et/ou du niveau de remplissage du pulvérisateur à cultures et/ou en fonction du fait que le pulvérisateur à cultures fonctionne dans un mode de remplissage ou dans un mode d'épandage.

5. Pulvérisateur à cultures agricole selon l'une des revendications précédentes, comprenant en outre :
une rampe de distribution (7) comportant des buses de pulvérisation (8) ; et
une conduite à liquide (6) qui relie le réservoir à liquide (1) à la rampe de distribution (7) ;
le détecteur de débit (9) étant disposé dans la conduite à liquide (6).

6. Pulvérisateur à cultures agricole selon l'une des revendications précédentes, le dispositif d'interprétation (3) étant configuré de telle sorte qu'il utilise au moins deux niveaux et/ou débits déterminés par la combinaison des valeurs mesurées afin d'effectuer un calibrage automatique du détecteur de débit (9 ; 21) en se basant sur une différence entre les au moins deux niveaux et/ou débits.

7. Pulvérisateur à cultures agricole selon la revendication 6, le calibrage automatique étant effectué plusieurs fois lors du fonctionnement du pulvérisateur à cultures avec un plein de réservoir du réservoir à liquide (1).

8. Pulvérisateur à cultures agricole selon la revendication 6 ou 7, le calibrage automatique étant effectué lorsque la différence entre au moins deux niveaux et/ou débits s'écarte d'une manière préalablement déterminée du débit volumique déterminé pendant la même durée par le détecteur de débit.

9. Pulvérisateur à cultures agricole selon l'une des revendications précédentes, **caractérisé en ce que** l'algorithme destiné à combiner les valeurs mesurées comprend un filtre de Kalman.

10. Procédé de détermination d'un niveau de remplissage d'un réservoir à liquide (1) d'un pulvérisateur à cultures agricole, qui comporte un réservoir à liquide (1), un détecteur de niveau (2) associé au réservoir à liquide (1), un détecteur de débit (9 ; 21) et un dispositif d'interprétation (3) relié au détecteur de niveau (2) et au détecteur de débit (9 ; 21) ; le procédé comprenant les étapes suivantes :
détermination d'une valeur mesurée du détecteur de niveau (2) ;
détermination d'une valeur mesurée du détecteur de débit (9 ; 21) ; et
détermination du niveau de remplissage du réservoir à liquide (1) par le dispositif d'interprétation (3) en se basant sur une combinaison de la valeur mesurée du détecteur de niveau (2) avec la valeur mesurée du détecteur de débit (9 ; 21).

11. Procédé selon la revendication 9, le dispositif d'interprétation (3) combinant les valeurs mesurées par le biais d'un algorithme et les facteurs de pondération utilisés par l'algorithme étant adaptés en fonction du fonctionnement du pulvérisateur à cultures agricole.

12. Procédé selon la revendication 9 ou 10, comprenant en outre un calibrage automatique du détecteur de débit en se basant sur une différence entre au moins deux niveaux déterminés.

13. Procédé selon l'une des revendications 10 à 13, **caractérisé en ce que** l'algorithme destiné à combiner les valeurs mesurées comprend un filtre de Kalman.
